# EUROPEAN PATENT SPECIFICATION

(11) **EP 3 842 700 B1**
(45) Date of publication and mention of the grant of the patent: **03.01.2024**
(21) Application number: 20210307.3
(22) Date of filing: 27.11.2020
(51) Int. Cl.: F24F 7/08, F24F 11/75, F24F 110/70, F24F 110/76, F24F 8/60, F24F 8/15

(54) **AN AIR PURIFIER COMPRISING A NEUTRALIZATION RECEPTACLE**
EIN LUFTREINIGER MIT NEUTRALISIERUNGSEMPFÄNGER
UN PURIFICATEUR D'AIR COMPRENANT UN RÉCEPTACLE DE NEUTRALISATION

(30) Priority: 24.12.2019 TR 201921342
(43) Date of publication of application: 30.06.2021
(73) Proprietor: Arçelik Anonim Sirketi, 34445 Istanbul (TR)
(72) Inventor: YAVUZ, Pinar, 34445 ISTANBUL (TR); YESILCUBUK, Alper, 34445 ISTANBUL (TR); SARICIFTCI, Niyazi Serdar, 34445 ISTANBUL (TR); ER, Dilan, 34445 ISTANBUL (TR); YILMAZ, Tugce, 34445 ISTANBUL (TR)

(56) References cited:
- WO-A1-2007/128584
- WO-A2-2006/036396
- JP-A- 2003 144 828
- US-A1- 2014 248 206
- US-A1- 2015 290 576
- US-A1- 2018 224 145

## Description

The present invention relates to an air purifier which purifies the air in an indoor environment of a building in a safe manner.

Today, the need for ventilation and the need for fresh air becomes more important in environments such as homes and offices especially in high-rise buildings. Plants can be a temporary solution for daytime but when the sunlight disappears; plants also start to produce carbon dioxide like human beings and the air quality of the environment decreases. Especially in high-rise buildings, it is not always possible to continuously keep the windows open and ventilate the environment. The continuously rising carbon dioxide density in the air adversely affects human health. The amount of oxygen in the environment directly affects the metabolic rate of people and lack thereof creates weakness, fatigue and fatigue in humans. Ensuring that the amount of oxygen in the interior environment does not fall below a certain level while reducing the amount of carbon dioxide generated in the environment makes the human metabolism much more vivid and vigorous.

Today, air purifiers are known, which comprises carbon dioxide absorbing filters and which purifies the indoor air. However, in most of these devices, it is very difficult for the user to periodically clean the filter or problems such as bacterial formation in the filter are encountered.

In the state of the art Japanese Patent Application No. JP2003144828A, an air purifier is disclosed, which is operated with an acid- and base-based ion exchanger system.

In the state of the art devices wherein the air is purified by chemically absorbing carbon dioxide, there is the risk of the solutions used in the device leaking into the body during the operation of the device.

The aim of the present invention is the realization of an air purifier wherein the chemical solutions used in the air purification process are prevented from leaking into the body.

The air purifier of the present invention comprises an air inlet opening through which the ambient air is sucked in, a CO₂ absorbing unit wherein the carbon dioxide is absorbed from the air having high carbon dioxide density, and an air outlet opening through which the air which is cleansed of CO₂ is sent back to the indoor environment.

The air purifier of the present invention comprises an acid dosing unit and a base dosing unit.

The air purifier of the present invention comprises a control unit which controls the operation of the device, and which controls the delivery of acid and base from the acid dosing unit and the base dosing unit to the CO₂ absorbing unit in the correct time and order.

The air purifier of the present invention comprises an electrodialysis unit which resolves the salt generated in the CO2 absorbing unit back to acid and base so as to be supplied to the acid and base dosing units.

The air purifier of the present invention comprises a neutralization receptacle. The neutralization receptacle is a container wherein the leak from the acid and base dosing units is collected if there is any acid/base leak in the body.

The neutralization receptacle can be produced from any material resistant to acid and base solutions.

The neutralization receptacle comprises a sensor. Upon detecting any liquid in the neutralization receptacle, the sensor transmits the leak warning to the control unit. In case of leak, the control unit completely discharges both the acid and base dosing units.

The acid dosing unit and the base dosing unit each comprise a discharge tube extending to the neutralization receptacle. In the main embodiment of the present invention, the discharge tubes are controlled by valves.

The CO₂ absorbing unit also comprises a discharge tube extending to the neutralization receptacle. In case any leak in said CO₂ absorbing unit, the sensor detects the liquid, ensuring the emptying of the CO₂ absorbing unit to the neutralization receptacle.

In an embodiment of the present invention, the neutralization receptacle has an inclined base, and the sensor is disposed at the deepest section of said inclined base and preferably so as to contact both the side and base of the neutralization receptacle.

The neutralization receptacle is a drawer-shaped receptacle which can be attached to/detached from the body, and the sensor, upon detecting a liquid level in the neutralization receptacle higher than a liquid level predetermined by the producer, detects that the acid and base dosing units are completely emptied, and gives a warning by means of the control unit. Thus, the user empties the full neutralization receptacle.

By means of the present invention, an air purifier which is securely operated is realized, wherein the acid and base solutions ensuring the absorbing of carbon dioxide are prevented from leaking into the body, thus eliminating the risks of harming the user.

The model embodiments that relate to the air purifier realized in order to attain the aim of the present invention are illustrated in the attached figures, where:

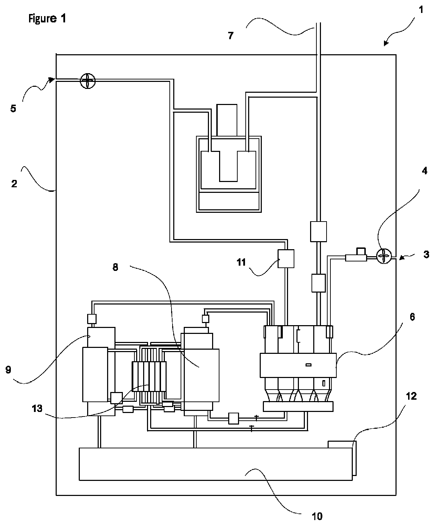

**Figure 1** - is the schematic view of the air purifier comprising the neutralization receptacle in an embodiment of the present invention.

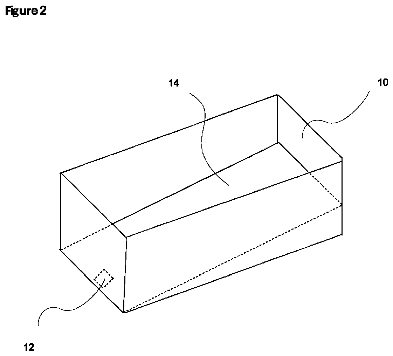

**Figure 2** - is the schematic view of the neutralization receptacle in the air purifier of an embodiment of the present invention.

The elements illustrated in the figures are numbered as follows:
1. Air purifier
2. Body
3. Air inlet opening
4. Fan
5. Air outlet opening
6. CO₂ absorbing unit
7. CO₂ outlet line
8. Acid dosing unit
9. Base dosing unit
10. Neutralization receptacle
11. Control unit
12. Sensor
13. Electrodialysis unit
14. Inclined base

The air purifier (1) comprises a body (2); an air inlet opening (3) provided on the body (2); a fan (4) which enables the air to be directed through the air inlet opening (3) into the body (2); an air outlet opening (5) which enables the air purified in the body (2) to be released out of the body (2); a CO₂ absorbing unit (6) into which the air is sucked; a base dosing unit (9) which supplies a base solution into the CO₂ absorbing unit (6); an acid dosing unit (8) which supplies an acid solution into the CO₂ absorbing unit (6); a CO₂ outlet line (7) enabling the CO₂ absorbed in the CO₂ absorbing unit (6) to be discharged from the environment wherein the air is purified; and an electrodialysis unit (9) wherein the salt, generated in the CO₂ absorbing unit (6) after the base solution and the acid solution are supplied to the CO₂ absorbing unit (6) respectively, is resolved back to acid and base.

The air purifier (1) of the present invention comprises a neutralization receptacle (10) which is suitable for collection the acid and base solutions in case of a leak into the body (2) from the acid dosing unit (8), the base dosing unit (9) and the CO₂ absorbing unit (6).

In the air purifier (1) of the present invention, the acid and base solutions are supplied from the acid and base dosing units (8, 9) to the CO₂ absorbing unit (6) wherein the carbon dioxide is absorbed and the air is cleaned, thus the carbon dioxide is trapped in the CO₂ absorbing unit (6) until the formation of salt, and then discharged to outside the indoor environment, that is the building. During these processes, any leak which may occur in the acid dosing unit (8), the base dosing unit (9) or the CO₂ absorbing unit (6) poses risks to the secure operation of the air purifier (1). By means of the neutralization receptacle (10) positioned below the acid dosing unit (8), the base dosing unit (9) and the CO₂ absorbing unit (6), in case any leak in said units, the leak is collected in the neutralization receptacle (10), thus preventing the air purifier (1) from harming the user.

In an embodiment of the present invention, the air purifier (1) comprises the neutralization receptacle (10) having a sensor (12) which detects the acid or base leak, and a control unit (11) which is in communication with the sensor (12) and which enables both the acid dosing unit (8) and the base dosing unit (9) to be simultaneously emptied. Thus, the neutralization receptacle (10) is not only used for collecting acid or base solution, but the acid and base are neutralized, and the solution collected in the neutralization receptacle (10) is rendered harmless.

In an embodiment of the present invention, the air purifier (1) comprises the neutralization receptacle (10) having an inclined base (14) and a sensor (12) positioned in the vicinity of the deepest side of the inclined base (14). By means of the inclined base (14) of the neutralization receptacle (10), even if there is only a small leak, the leaked solution is collected at the deepest corner of the neutralization receptacle (10) and the sensor (12) positioned there easily detects the leak.

In an embodiment of the present invention, the air purifier (1) comprises the neutralization receptacle (10) which is detachably attached to the body (2). Thus, the user can empty the solutions or salt collected in the neutralization receptacle (10).

In an embodiment of the present invention, the air purifier (1) comprises a control unit (11) which warns the user when the liquid level in the neutralization receptacle (10) exceeds a liquid level predetermined by the producer. Thus, the control unit (11) informs the user when the acid and base dosing units (8, 9) are completely emptied into the neutralization receptacle (10), and the user is prevented from contacting any unneutralized liquid in case of a leak.

By means of the present invention, an air purifier (1) which operates safely is realized.

## Claims

1. An air purifier (1) which purifies the air in an indoor environment of a building **comprising** a body (2); an air inlet opening (3) provided on the body (2); a fan (4) which enables the air to be directed through the air inlet opening (3) into the body (2); an air outlet opening (5) which enables the air purified in the body (2) to be released out of the body (2); a CO₂ absorbing unit (6) into which the air is sucked; a base dosing unit (9) which supplies a base solution into the CO₂ absorbing unit (6); an acid dosing unit (8) which supplies an acid solution into the CO₂ absorbing unit (6); a CO₂ outlet line (7) enabling the CO₂ absorbed in the CO₂ absorbing unit (6) to be discharged from the environment wherein the air is purified; and an electrodialysis unit (9) wherein the salt, generated in the CO₂ absorbing unit (6) after the base solution and the acid solution are supplied to the CO₂ absorbing unit (6) respectively, is resolved back to acid and base, **characterized by** a neutralization receptacle (10) which is suitable for collection the acid and base solutions in case of a leak into the body (2) from the acid dosing unit (8), the base dosing unit (9) and the CO₂ absorbing unit (6).

2. An air purifier (1) as in Claim 1, **characterized by** the neutralization receptacle (10) having a sensor (12) which detects the acid or base leak, and a control unit (11) which is in communication with the sensor (12) and which enables both the acid dosing unit (8) and the base dosing unit (9) to be simultaneously emptied in case of leak.

3. An air purifier (1) as in Claim 1 or 2, **characterized by** the neutralization receptacle (10) having an inclined base (14) and a sensor (12) positioned in the vicinity of the deepest side of the inclined base (14).

4. An air purifier (1) as in any one of the above claims, **characterized by** the neutralization receptacle (10) which is detachably attached to the body (2).

5. An air purifier (1) as in any one of the above claims, **characterized by** a control unit (11) which warns the user when the liquid level in the neutralization receptacle (10) exceeds a liquid level predetermined by the producer.

## Patentansprüche

1. Ein Luftreiniger (1), der die Luft in einer Innenumgebung eines Gebäudes reinigt, **umfasst** einen Körper (2); eine am Körper (2) vorgesehene Lufteinlassöffnung (3); einen Ventilator (4), der es ermöglicht, die Luft durch die Lufteinlassöffnung (3) in den Körper (2) zu leiten; eine Luftaustrittsöffnung (5), die ein Ablassen der im Körper (2) gereinigten Luft aus dem Körper (2) ermöglicht, eine CO2-Absorptionseinheit (6), in die die Luft eingesaugt wird, eine Basisdosiereinheit (9), die eine Basislösung in die CO2-Absorptionseinheit (6) liefert; eine Säuredosiereinheit (8), die der CO2-Absorptionseinheit (6) eine Säurelösung zuführt; eine CO2-Auslassleitung (7), die es ermöglicht, das in der CO2-Absorptionseinheit (6) absorbierte CO2 aus der Umgebung abzuführen, in der die Luft gereinigt wird, und eine Basisdosiereinheit (9), in der das Salz, das in der CO2-Absorptionseinheit (6) erzeugt wird, nachdem die Basenlösung bzw. die Säurelösung der CO2-Absorptionseinheit (6) zugeführt wurde, wieder in Säure und Base aufgelöst wird, gekennzeichnet ist er dadurch, dass ein Neutralisationsbehälter (10), der zum Auffangen der Säure- und Basenlösungen im Falle eines Lecks in den Körper (2) aus der Säuredosiereinheit (8), der Basisdosiereinheit (9) und der CO2-Absorptionseinheit (6) geeignet ist.

2. Ein Luftreiniger (1), wie in Anspruch 1 aufgeführt, **ist dadurch gekennzeichnet, dass** der Neutralisationsbehälter (10) einen Sensor (12) aufweist, der das Austreten von Säure oder Base erkennt, und eine Steuereinheit (11), die mit dem Sensor (12) in Verbindung steht und im Falle einer Leckage eine gleichzeitige Entleerung sowohl der Säuredosiereinheit (8) als auch der Basisdosiereinheit (9) ermöglicht.

3. Ein Luftreiniger (1), wie in Anspruch 1 oder 2 aufgeführt, **ist dadurch gekennzeichnet, dass** der Neutralisationsbehälter (10) einen geneigten Boden (14) und einen Sensor (12) aufweist, der in der Nähe der tiefsten Seite des geneigten Bodens (14) positioniert ist.

4. Ein Luftreiniger (1), wie in einem der vorherigen Ansprüchen aufgeführt, **ist dadurch gekennzeichnet, dass** der Neutralisationsbehälter (10) lösbar am Körper (2) befestigt ist.

5. Ein Luftreiniger (1), wie in einem der vorherigen Ansprüchen aufgeführt, **ist dadurch gekennzeichnet, dass** eine Steuereinheit (11) den Benutzer warnt, wenn der Flüssigkeitsstand im Neutralisationsbehälter (10) einen vom Hersteller vorgegebenen Flüssigkeitsstand überschreitet.

## Revendications

1. Un purificateur d'air (1) qui purifie l'air dans un environnement intérieur d'un bâtiment **comprenant** un corps (2) ; une ouverture d'entrée d'air (3) prévue sur le corps (2) ; un ventilateur (4) qui permet à l'air d'être dirigé à travers l'ouverture d'entrée d'air (3) dans le corps (2) ; une ouverture de sortie d'air (5) qui permet à l'air purifié dans le corps (2) d'être libéré hors du corps (2) ; une unité d'absorption de CO₂ (6) dans laquelle l'air est aspiré ; une unité de dosage de base (9) qui fournit une solution de base dans l'unité d'absorption de CO₂ (6) ; une unité de dosage d'acide (8) qui fournit une solution d'acide dans l'unité d'absorption de CO₂ (6) ; une ligne de sortie de CO₂ (7) permettant au CO₂ absorbé dans l'unité d'absorption de CO₂ (6) d'être déchargé de l'environnement dans lequel l'air est purifié ; et une unité d'électrodialyse (9) dans laquelle le sel, généré dans l'unité d'absorption du CO₂ (6) après que la solution de base et la solution d'acide ont été fournies à l'unité d'absorption du CO₂ (6) respectivement, est transformé en acide et en base, **caractérisée par** un récipient de neutralisation (10) qui convient pour recueillir les solutions d'acide et de base en cas de fuite dans le corps (2) à partir de l'unité de dosage d'acide (8), de l'unité de dosage de base (9) et de l'unité d'absorption du CO₂ (6).

2. Un purificateur d'air (1) selon la déclaration 1, **caractérisé par le fait que** le récipient de neutralisation (10) comporte un capteur (12) qui détecte la fuite d'acide ou de base, et une unité de commande (11) qui est en communication avec le capteur (12) et qui permet de vider simultanément l'unité de dosage d'acide (8) et l'unité de dosage de base (9) en cas de fuite.

3. Un purificateur d'air (1) selon la déclaration 1 ou 2, **caractérisé par le fait que** le réceptacle de neutralisation (10) a une base inclinée (14) et un capteur (12) positionné à proximité de la face la plus profonde de la base inclinée (14).

4. Un purificateur d'air (1) selon l'une quelconque des déclarations précédentes, **caractérisé par** le réceptacle de neutralisation (10) qui est fixé de manière amovible au corps (2).

5. Un purificateur d'air (1) selon l'une quelconque des déclarations précédentes, **caractérisé par** une unité de commande (11) qui avertit l'utilisateur lorsque le niveau de liquide dans le réceptacle de neutralisation (10) dépasse un niveau de liquide prédéterminé par le producteur.
